# EUROPÄISCHE PATENTSCHRIFT

(11) **EP 3 546 266 B1**
(45) Veröffentlichungstag und Bekanntmachung des Hinweises auf die Patenterteilung: **20.01.2021**
(21) Anmeldenummer: 18164579.7
(22) Anmeldetag: 28.03.2018
(51) Int. Cl.: B60K 15/03, B60K 13/04, F01N 3/20

(54) **KOMBINATIONSTANK UND BEHÄLTER AUS KUNSTSTOFF HIERFÜR**
COMBINATION TANK AND PLASTIC VESSEL FOR SAME
RÉSERVOIR COMBINÉ ET RÉCIPIENT EN MATIÈRE PLASTIQUE ASSOCIÉ

(43) Veröffentlichungstag der Anmeldung: 02.10.2019
(73) Patentinhaber: Salzburger Aluminium Aktiengesellschaft, 5651 Lend (AT)
(72) Erfinder: Hoek, Willem, 2231 BL Rijnsburg (NL); Lablans, Sander, 2493 BT Den Haag (NL); Winklhofer, Johannes, 5061 Elsbethen (AT)
(74) Vertreter: Weiser & Voith Patentanwälte Partnerschaft

(56) Entgegenhaltungen:
- EP-A1- 2 308 710
- EP-A2- 1 736 350
- DE-A1-102006 056 430
- DE-A1-102010 021 301
- DE-A1-102016 204 648

## Beschreibung

Die vorliegende Erfindung betrifft einen Behälter aus Kunststoff für ein Betriebsmittel eines Fahrzeugs zum Anbau an einen Treibstofftank des Fahrzeugs. Die Erfindung betrifft ferner einen Kombinationstank für ein Fahrzeug umfassend den Behälter und den Treibstofftank.

Treibstofftanks für Fahrzeuge, insbesondere Nutzfahrzeuge, sind heute meist aus Metall, z.B. aus Aluminium, gefertigt. Solche Treibstofftanks haben bei guter mechanischer Festigkeit ein ausreichend geringes Gewicht, sind jedoch nicht resistent gegenüber chemisch aggressiven Betriebsmitteln des Fahrzeugs, z.B. in Wasser gelöstem Harnstoff (wie AdBlue®) od.dgl. Dafür wird beispielsweise ein separater Behälter aus Kunststoff mittels Konsole am Fahrzeug angebaut oder ein mit einer Trennwand im Inneren des Treibstofftanks abgetrennter Bereich des Tanks, z.B. mittels Rotolining, beschichtet.

Um eine zusätzliche Befestigungskonsole bzw. das aufwändige Beschichtungsverfahren zu sparen, ist aus der WO 2011/109842 bekannt, in die Wand eines Behälters aus Kunststoff im Kunststoff-Spritzgussverfahren einen zylindrischen Metallkragen einzuspritzen, welcher später mit dem Mantel des Treibstofftanks verschweißt wird. Um ein Aufweichen der Behälterwand beim Schweißen zu vermeiden, muss dabei der Metallkragen ausreichend breit und somit raumgreifend sein, was die Handhabung und Lagerung des Behälters erschwert und die Materialkosten erhöht. Alternativ dazu ist aus der DE 10 2007 040 416 ein Aluminium-Kraftstoffbehälter mit zylindrischem Mantelkragen bekannt, der über eine stirnseitige Verschlusswand des Tanks hinausragt, wobei in den überstehenden Mantelteil ein Kunststoffbehälter eingesteckt und z.B. mit Hilfe von in sein Hülle eingeschmolzenen Gewindebuchsen an den überstehenden Mantel verschraubt wird. Eine stabile Befestigung des Behälters erfordert dabei eine weite Überlappung mit dem Kragen und damit wieder einen breiten Kragen. Die Abmessungen des Kragens geben dabei die Form der einsetzbaren Kunststoffbehälter fix vor. Ferner besteht die Gefahr von Lecks in der Hülle des Behälters, u.zw. bereits beim Einschmelzen der Gewindebuchsen und später während des Fahrzeugbetriebs infolge laufender Belastung der Gewindebuchsen.

Weiterhin ist ein Behälter aus Kunststoff für ein Betriebsmittel eines Fahrzeugs zum Anbau an einen Treibstofftank des Fahrzeugs aus der DE 10 2010 021 301 A1 bekannt.

Die Erfindung setzt sich zum Ziel, einen Behälter aus Kunststoff und einen Kombinationstank für ein Fahrzeug zu schaffen, welche einfach herstellbar und raumsparend und flexibel verwendbar sind und die Dichtheit des Behälters langfristig gewährleisten.

Dieses Ziel wird gemäß einem ersten Aspekt der Erfindung mit einem Behälter der einleitend genannten Art erreicht, welcher einen Mantel und diesen beidseitig abschließende Stirnwände hat und sich dadurch auszeichnet, dass eine der Stirnwände zumindest zwei Vertiefungen zur Aufnahme jeweils eines korrespondierenden Vorsprungs des Treibstofftanks und der Mantel hinter jeder Vertiefung eine Einbuchtung hat, wobei ein Seitenbereich der Einbuchtung mit einem Bodenbereich der Vertiefung betriebsmitteldicht verschweißt oder verklebt ist und die genannten Bereiche von einer Bohrung für den Durchtritt eines Befestigungsmittels zur Verankerung an dem Vorsprung durchsetzt sind. Dies ermöglicht eine Huckepack-Anordnung des Behälters an dem Treibstofftank. Behälter und Treibstofftank sind einfach herstellbar und raumsparend und können flexibel eingesetzt und kombiniert werden. Der Behälter benötigt keine eigene Befestigungskonsole am Fahrzeug; überhaupt ist die Anzahl der zusätzlichen Bauteile äußerst gering. Dennoch sind Behälter und Treibstofftanks in der angebauten Stellung ausreichend stabil.

Da Treibstofftanks im Allgemeinen einen rechteckigen Querschnitt haben, ist es aus Gründen der Raumnutzung günstig, wenn auch die genannte Stirnwand im Wesentlichen rechteckig ist und die Vertiefungen an den Ecken angeordnet sind. Auf dieser Weise sind die Befestigungsmittel einfach zugänglich und leiten Kräfte in den stärksten Teil des Mantels, den Bereich seiner Kanten, ein. Um einen besonders stabilen Anbau an den Treibstofftank zu ermöglichen, hat dabei die genannte Stirnwand bevorzugt vier Vertiefungen. Dies führt zu einer besonders günstigen Kraftverteilung an allen vier Ecken der genannten Stirnwand bzw. Krafteinleitung in alle vier Kanten des Mantels.

Zur Verstärkung ist ferner vorteilhaft, wenn in jede Bohrung eine Hohlniete oder Steckhülse eingesetzt ist. Die Hohlniete oder Steckhülse kann dabei aus einem anderen Material als der Behälter selbst, z.B. einem härteren Kunststoff, einem Verbundstoff oder aus Metall, sein.

Um dem Behälter auch bei geringerer Wandstärke ausreichend Stabilität zu geben, ist es günstig, wenn die Stirnwände mittels eines im Inneren des Behälters verlaufenden Spannglieds gegeneinander gespannt sind. Der Behälter kann somit insgesamt leichter gebaut sein.

In einem zweiten Aspekt schafft die Erfindung einen Kombinationstank für ein Fahrzeug, umfassend einen Treibstofftank aus Metall mit einem Tankmantel und diesen beidseitig abschließenden Stirnkappen, von welchen eine Stirnkappe zumindest zwei Vorsprünge hat, und einen Behälter der vorgenannten Art, wobei die Vorsprünge des Treibstofftanks in den Vertiefungen des Behälters aufgenommen sind und der Behälter mit durch die Bohrungen der genannten Bereiche hindurchtretenden Befestigungsmittel an den Vorsprüngen verankert ist. Ein solcher Kombinationstank ermöglicht das getrennte Speichern von Treibstoff und Betriebsmitteln, z.B. chemisch aggressiven Betriebsmitteln, und kann dabei wie ein einziger Tank gehandhabt werden. Falls erforderlich kann ferner ein bestehender Treibstofftank eines Fahrzeugs flexibel nachgerüstet werden, indem an dem Treibstofftank nachträglich Vorsprünge zum Anbau des Behälters aus Kunststoff angebracht werden. Bezüglich weiterer Vorteile wird auf die vorangegangenen Ausführungen zum Behälter verwiesen.

Bevorzugt sind die Vorsprünge an die genannte Stirnkappe geschweißt. Das Schweißen führt zu einer stabilen Verbindung und kann auch nachträglich an einem bestehenden Tank erfolgen, falls erforderlich.

Als Befestigungsmittel kommen beispielsweise Nieten oder an den Vorsprüngen ausgebildete Gewindebolzen und Muttern in Frage. Besonders günstig ist es, wenn die Vorsprünge mit den Bohrungen korrespondierende Gewindebohrungen haben und die genannten Befestigungsmittel Schrauben sind. Dies schafft eine lösbare Verbindung mit wenigen, einfachen Teilen. Bevorzugt verlaufen dabei die Gewindebohrungen etwa parallel zum Tankmantel. Auf diese Weise ist der Platzbedarf beim Anbauen des Behälters an den Treibstofftank besonders gering und die Schrauben werden in Anbaurichtung in die Gewindebohrungen eingedreht, was sogar beim Anbau an einen bereits am Fahrzeug installierten Treibstofftank zu bewerkstelligen ist.

Bevorzugt ist die Form der genannten Stirnwand des Behälters an die Form der genannten Stirnkappe des Treibstofftanks angepasst, um eine gute Raumausnutzung und einen stabilen Sitz des Behälters an der Stirnkappe des Treibstofftanks zu gewährleisten.

Die Erfindung wird nachstehend anhand eines in den beigeschlossenen Zeichnungen dargestellten Ausführungsbeispiels näher erläutert. In den Zeichnungen zeigt:
Fig. 1 einen Kombinationstank für ein Fahrzeug gemäß der Erfindung mit einem Treibstofftank aus Metall und einem Behälter aus Kunststoff in einer Perspektivansicht von schräg vorne;
Fig. 2 den Behälter von Fig. 1 in einer Perspektivansicht von schräg hinten; und
Fig. 3 den Treibstofftank von Fig. 1 in einer Perspektivansicht von schräg vorne.

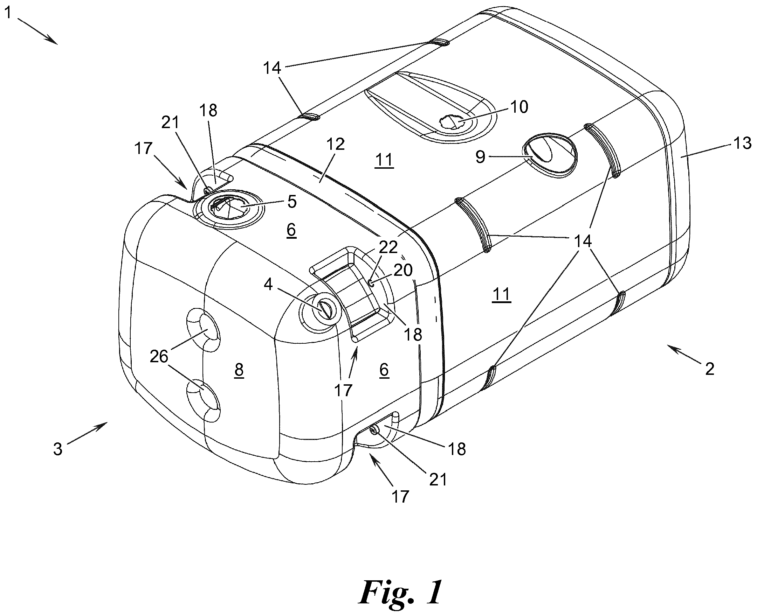

Die Fig. 1 bis 3 zeigen einen Kombinationstank 1 für ein Fahrzeug, insbesondere ein Nutzfahrzeug. Der Kombinationstank 1 umfasst einen Treibstofftank 2 aus Metall, z.B. aus Stahl oder Aluminium, und einen Behälter 3 aus Kunststoff, welcher im Beispiel von Fig. 1 an den Treibstofftank 2 angebaut ist. Der Behälter 3 dient zur Aufnahme von Betriebsmitteln des Fahrzeugs, welche beispielsweise chemisch aggressiv, z.B. in Wasser gelöster Harnstoff (wie AdBlue®) od.dgl., sein können. Im dargestellten Beispiel ist der Behälter 3 eine chemisch resistente, dichte Kunststoffblase mit einer Einfüllöffnung 4 und einer Entnahmeöffnung 5 für das Betriebsmittel. Der Behälter hat einen Mantel 6 und Stirnwände 7, 8, welche den Mantel beidseitig abschließen. Auch der Treibstofftank 2 hat Einfüll- und Entnahmeöffnungen 9, 10 und einen Tankmantel 11, welcher beidseitig von jeweils einer Stirnkappe 12, 13 abgeschlossen ist.

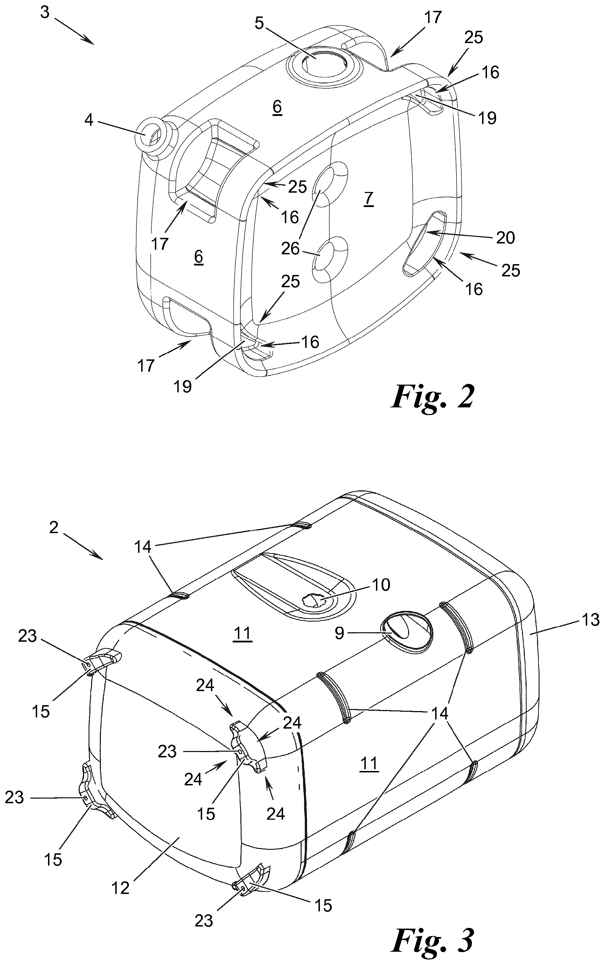

Derartige Treibstofftanks 2 haben zur besseren Raumausnutzung neben der zylindrischen Form meistens rechteckigen Querschnitt, abgerundete Kanten und sind ein wenig bombiert, wie in dem Beispiel der Fig. 1 und 3 gezeigt; der Querschnitt könnte alternativ z.B. oval, insbesondere rund, oder ein anderes Polygon sein oder überhaupt andere Form haben. Am Tankmantel 11 sind im Beispiel der Fig. 1 und 3 zusätzlich Rillen 14 zur Fixierung innenliegender Schwallwände und/oder zur Montage des Treibstofftanks 2 an einer Tragkonsole des Fahrzeugs mithilfe von Gurten oder Bändern (nicht gezeigt) vorgesehen.

Die in der Darstellung der Fig. 3 im Vordergrund sichtbare Stirnkappe 12 des Treibstofftanks 2 hat zumindest zwei (in diesem Beispiel: vier) Vorsprünge 15. Die Vorsprünge 15 sind beispielsweise an die genannte Stirnkappe 12 geschweißt, geklebt, aus dem Metall der Stirnkappe 12 geformt od.dgl.

Ebenso hat eine der Stirnwände 7, 8 des Behälters 3 - in der Darstellung der Fig. 2 die im Vordergrund sichtbare Stirnwand 7, welche im angebauten Zustand gemäß Fig. 1 nicht sichtbar ist - zumindest zwei (im Beispiel der Fig. 2: vier) Vertiefungen 16 zur Aufnahme jeweils eines korrespondierenden Vorsprungs 15 des Treibstofftanks 2. Ferner hat der Mantel 6 des Behälters hinter jeder Vertiefung 16 eine Einbuchtung 17. Ein Seitenbereich 18 der Einbuchtung 17, d.h. ein Bereich 18 ihrer seitlichen Wand (Fig. 1), ist mit einem Bodenbereich 19 der Vertiefung 16 (Fig. 2) betriebsmitteldicht verschweißt oder verklebt. Die genannten Bereiche 18, 19, d.h. der Seitenbereich 18 der Einbuchtung 17 und der damit verschweißte oder verklebte Bodenbereich 19 der Vertiefung 16, sind von zumindest einer Bohrung 20 für den Durchtritt eines Befestigungsmittels 21 durchsetzt. Mit dem Befestigungsmittel 21 werden die miteinander verschweißten bzw. verklebten Seiten- und Bodenbereiche 18, 19 und damit der Behälter 3 an dem jeweils korrespondierenden Vorsprung 15 verankert.

Das betriebsmitteldichte Verschweißen bzw. Verkleben der jeweiligen Seiten- und Bodenbereiche 18, 19, bei welchem die jeweiligen Innenseiten der Wandung des Behälters 3 miteinander verbunden werden, erfolgt nach einem dem Fachmann bekannten Kunststoff-Schweißverfahren, wozu im Sinne der vorliegenden Beschreibung jede Art von Verschmelzung gehört, insbesondere eine sogenannte Kiss-Off-Verbindung, d.h. die Verschmelzung zweier unmittelbar benachbarter Wandungen, die z.B. bei einem Rotomoulding-Prozess infolge einer Brückenbildung zwischen diesen Wandungen auftritt, oder mit bekannten chemisch resistenten Klebstoffen. Ferner könnte die Schweißstelle ergänzend mit Klebstoff verstärkt werden, indem z.B. Spalte mit Klebstoff gefüllt und/oder die Bohrung 20 mit Klebstoff gesichert werden. Zur weiteren Verstärkung kann dabei optional in die Bohrung 20 eine Hohlniete oder Steckhülse 22 eingesetzt werden. Diese kann aus einem Kunst- oder Verbundstoff oder aus Metall sein.

Im Beispiel der Fig. 1 bis 3 sind die Befestigungsmittel 21 Schrauben, welche in mit den Bohrungen 20 korrespondierende Gewindebohrungen 23 der Vorsprünge 15 eingedreht sind. Alternativ ist der Behälter 3 durch die Bohrungen 20 hindurch an die Vorsprünge 15 genietet. In einer weiteren Alternativvariante der Befestigungsmittel 21 hat beispielsweise jeder Vorsprung 15 zumindest einen abstehenden Gewindebolzen, welcher in der an den Treibstofftank 2 angebauten Stellung des Behälter 3 durch eine der Bohrungen 20 hindurchtritt; der Behälter 3 wird dabei mithilfe von auf die Gewindebolzen gedrehten Muttern am Vorsprung 15 verankert.

Es versteht sich, dass die Vorsprünge 15 und die Vertiefungen 16 symmetrisch an der Stirnkappe 12 bzw. der Stirnwand 7 verteilt sein können, sodass der Behälter 3 an den Treibstofftank 2 in verschiedenen Ausrichtungen angebaut werden kann; alternativ kann durch asymmetrische Verteilung und/oder durch verschiedene Formen der Vorsprünge 15 bzw. der Vertiefungen 16 für den Anbau eine eindeutige Ausrichtung fix vorgegeben sein. Die Vorsprünge 15 und die Vertiefungen 16 können z.B. kegelförmig oder zylindrisch oder, wie im Beispiel der Fig. 3, zumindest die Vorsprünge 15 an ihren verschiedenen Lateralseiten 24 unterschiedlich geformt sein. Zumindest einige der Lateralseiten 24 können dabei etwa parallel zum Tankmantel 11 oder beispielsweise schräg dazu und zueinander parallel verlaufen. Ferner können die genannten Gewindebohrungen 23 parallel zum Tankmantel 11 oder schräg dazu verlaufen.

In dem dargestellten Beispiel ist die Stirnwand 7 des Behälters 3 im Wesentlichen rechteckig (hier: mit nach außen gekrümmten Randbereichen entsprechend der Bombierung des Treibstofftanks 2) und sind die Vertiefungen 16 an den Ecken 25 angeordnet. In diesem Beispiel hat ferner die Stirnwand 7 vier Vertiefungen 16, d.h. in jeder Ecke 25 jeweils eine Vertiefung 16; dazu kann die Stirnkappe 12 des Treibstofftanks 2 zwei, drei oder - zur Kraftverteilung - insbesondere vier korrespondierende Vorsprünge 15 zur Aufnahme in jeweils einer Vertiefung 16 haben. Alternativ könnte der Behälter 3 eine vom Querschnitt des Treibstofftanks 2 abweichende Form haben, z.B. oval bzw. rund, und/oder könnten die Vertiefungen 16 nicht an den Ecken 25 angeordnet sein. Es könnten ferner jeweils mehr als vier miteinander korrespondierende Vorsprünge 15 und Vertiefungen 16 vorgesehen sein.

In einer weiteren Ausführungsform sind der jeweilige Seitenbereich 18 einer oder mehrerer Einbuchtung(en) 17 und der jeweilige Bodenbereich 19 der zugehörigen Vertiefung(en) 16 - anders als im Beispiel der Fig. 2 - bis zum Rand der Stirnwand 7 miteinander verschweißt oder verklebt und bilden so eine Lasche, welche zur Aufnahme des korrespondierenden Vorsprungs 15 becherförmig gewölbt ist.

Der Behälter 3 hat optional ein in seinem Inneren verlaufendes Spannglied, z.B. einen Verbindungssteg, ein Band od.dgl., welches die Stirnwände 7, 8 gegeneinander spannt. In dem Beispiel der Fig. 1 und 2 sind zwei Spannglieder durch miteinander im Inneren des Behälters 3 verbundene Einstülpungen 26 der Stirnwände 7, 8 gebildet. Es versteht sich, dass weitere Spannglieder vorgesehen sein können, welche, falls erforderlich, auch zwischen gegenüberliegenden Teilen des Mantels 6 des Behälters 3 gespannt sein könnten.

Optional ist die Form der dem Treibstofftank 2 zugewandten Stirnwand 7 des Behälters 3 an die Form der entsprechenden Stirnkappe 12 angepasst, z.B. rechteckig und dabei konkav, wie im Beispiel der Fig. 2 gezeigt. Ebenso kann die dem Treibstofftank 2 abgewandte Stirnwand 8 des Behälters 3 der Form der Stirnkappe 12 wie im gezeigten Beispiel nachgebildet oder andererseits völlig anders geformt sein, z.B. um einem Rad des Fahrzeugs oder einem anderen Fahrzeugteil Raum zu bieten.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Behälter aus Kunststoff für ein Betriebsmittel eines Fahrzeugs zum Anbau an einen Treibstofftank (2) des Fahrzeugs, welcher Behälter (3) einen Mantel (6) und diesen beidseitig abschließende Stirnwände (7, 8) hat, **dadurch gekennzeichnet, dass** eine der Stirnwände (7, 8) zumindest zwei Vertiefungen (16) zur Aufnahme jeweils eines korrespondierenden Vorsprungs (15) des Treibstofftanks (2) und der Mantel (6) hinter jeder Vertiefung (16) eine Einbuchtung (17) hat, wobei ein Seitenbereich (18) der Einbuchtung (17) mit einem Bodenbereich (19) der Vertiefung (16) betriebsmitteldicht verschweißt oder verklebt ist und die genannten Bereiche (18, 19) von einer Bohrung (20) für den Durchtritt eines Befestigungsmittels (21) zur Verankerung an dem Vorsprung (15) durchsetzt sind.

2. Behälter nach Anspruch 1, **dadurch gekennzeichnet, dass** die genannte Stirnwand (7) im Wesentlichen rechteckig ist und die Vertiefungen (16) an den Ecken (25) angeordnet sind.

3. Behälter nach Anspruch 2, **dadurch gekennzeichnet, dass** die genannte Stirnwand (7) vier Vertiefungen (16) hat.

4. Behälter nach einem der Ansprüche 1 bis 3, **dadurch gekennzeichnet, dass** in jede Bohrung (20) eine Hohlniete oder Steckhülse (22) eingesetzt ist.

5. Behälter nach einem der Ansprüche 1 bis 4, **dadurch gekennzeichnet, dass** die Stirnwände (7, 8) mittels eines im Inneren des Behälters (3) verlaufenden Spannglieds gegeneinander gespannt sind.

6. Kombinationstank für ein Fahrzeug, umfassend einen Treibstofftank (2) aus Metall mit einem Tankmantel (11) und diesen beidseitig abschließenden Stirnkappen (12, 13), von welchen eine Stirnkappe (12) zumindest zwei Vorsprünge (15) hat, und einen Behälter (3) nach einem der Ansprüche 1 bis 5, wobei die Vorsprünge (15) des Treibstofftanks (2) in den Vertiefungen (16) des Behälters (3) aufgenommen sind und der Behälter (3) mit durch die Bohrungen (20) der genannten Bereiche (19) hindurchtretenden Befestigungsmitteln (21) an den Vorsprüngen (15) verankert ist.

7. Kombinationstank nach Anspruch 6, **dadurch gekennzeichnet, dass** die Vorsprünge (15) an die genannte Stirnkappe (12) geschweißt sind.

8. Kombinationstank nach Anspruch 6 oder 7, **dadurch gekennzeichnet, dass** die Vorsprünge (15) mit den Bohrungen (20) korrespondierende Gewindebohrungen (23) haben und die genannten Befestigungsmittel (21) Schrauben sind.

9. Kombinationstank nach Anspruch 8, **dadurch gekennzeichnet, dass** die Gewindebohrungen (23) etwa parallel zum Tankmantel (11) verlaufen.

10. Kombinationstank nach einem der Ansprüche 6 bis 9, **dadurch gekennzeichnet, dass** die Form der genannten Stirnwand (7) des Behälters (3) an die Form der genannten Stirnkappe (12) des Treibstofftanks (2) angepasst ist.

## Claims

1. Container made of plastic for an operating means of a vehicle, the container (3) to be mounted on a fuel tank (2) of the vehicle and having a mantle (6) and two end walls (7, 8) closing the mantle (6) on both ends, **characterised in that** one of the end walls (7, 8) has at least two recesses (16) each for receiving a corresponding projection (15) of the fuel tank (2) and the mantle (6) has an indentation (17) behind each recess (16), wherein a lateral section (18) of the indentation (17) is welded or glued with a floor section (19) of the recess (16) impermeably to the operating means and said sections (18, 19) are traversed by a bore (20) for the passage of a fastening means (21) for anchoring on the projection (15).

2. Container according to claim 1, **characterised in that** said end wall (7) is substantially rectangular and the recesses (16) are arranged at the corners (25).

3. Container according to claim 2, **characterised in that** said end wall (7) has four recesses (16).

4. Container according to any one of claims 1 to 3, **characterised in that** into each bore (20) a hollow rivet or plug-in sleeve (22) is inserted.

5. Container according to any one of claims 1 to 4, **characterised in that** the end walls (7, 8) are tensioned against each other by means of a tensioning member running inside the container (3).

6. Combination tank for a vehicle, comprising a fuel tank (2) made of metal with a tank mantle (11) and end caps (12, 13) closing the tank mantle (11) on both ends, one of the end caps (12) having at least two projections (15), and a container (3) according to any one of claims 1 to 5, wherein the projections (15) of the fuel tank (2) are received in the recesses (16) of the container (3) and the container (3) is anchored on the projections (15) by means of fastening means (21) passing through the bores (20) of said sections (19).

7. Combination tank according to claim 6, **characterised in that** the projections (15) are welded onto said end cap (12).

8. Combination tank according to claim 6 or 7, **characterised in that** the projections (15) have threaded bores (23) corresponding with the bores (20) and said fastening means (21) are screws.

9. Combination tank according to claim 8, **characterised in that** the threaded bores (23) run substantially parallel to the tank mantle (11).

10. Combination tank according to any one of claims 6 to 9, **characterised in that** the form of said end wall (7) of the container (3) is adapted to the form of said end cap (12) of the fuel tank (2).

## Revendications

1. Récipient en matière plastique destiné à un produit de fonctionnement d'un véhicule, prévu pour être monté sur un réservoir de carburant (2) du véhicule, lequel récipient (3) a une enveloppe (6) et des parois frontales (7, 8) le fermant des deux côtés, **caractérisé en ce qu'**une des parois frontales (7, 8) a au moins deux évidements (16) permettant la réception, respectivement, d'une protubérance (15) correspondante du réservoir de carburant (2) et l'enveloppe (6) a un renfoncement (17) derrière chaque évidement (16), où une zone latérale (18) du renfoncement (17) est soudée ou collée avec une zone de fond (19) de l'évidement (16) pour être étanche vis-à-vis du produit de fonctionnement et lesdites zones (18, 19) sont traversées par un alésage (20) pour le passage d'un moyen de fixation (21) permettant l'ancrage sur la protubérance (15).

2. Récipient selon la revendication 1, **caractérisé en ce que** ladite paroi frontale (7) est essentiellement rectangulaire et les évidements (16) sont disposés à des angles (25).

3. Récipient selon la revendication 2, **caractérisé en ce que** ladite paroi frontale (7) a quatre évidements (16).

4. Récipient selon l'une des revendications 1 à 3, **caractérisé en ce qu'**un rivet creux ou un manchon enfichable est inséré dans chaque alésage (20).

5. Récipient selon l'une des revendications 1 à 4, **caractérisé en ce que** les parois frontales (7, 8) sont mises sous tension l'une contre l'autre au moyen d'un organe de serrage s'étendant à l'intérieur du récipient (3).

6. Réservoir combiné pour un véhicule comprenant un réservoir de carburant (2) en métal avec une enveloppe de réservoir (11) et des capuchons frontaux (12, 13) fermant celui-ci aux deux côtés, dont un capuchon frontal (12) a au moins deux protubérances (15), et un récipient (3) selon l'une des revendications 1 à 5, où les protubérances (15) du réservoir de carburant (2) sont logées dans les évidements (16) du récipient (3) et le récipient (3) est ancré sur les protubérances (15) avec des moyens de fixations (21) passant les alésages (20) desdites zones (19).

7. Réservoir combiné selon la revendication 6, **caractérisé en ce que** les protubérances (15) sont soudées sur ledit capuchon frontal (12).

8. Réservoir combiné selon la revendication 6 ou 7, **caractérisé en ce que** les protubérances (15) ont des alésages filetés (23) correspondant avec les alésages (20) et lesdits moyens de fixation (21) sont des vis.

9. Réservoir combiné selon la revendication 8, **caractérisé en ce que** les alésages filetés (23) s'étendent à peu près parallèlement par rapport à l'enveloppe de réservoir (11).

10. Réservoir combiné selon l'une des revendications 6 à 9, **caractérisé en ce que** la forme de ladite paroi frontale (7) du récipient (3) est adaptée à la forme dudit capuchon frontal (12) du réservoir de carburant (2).
